(19) **Europäisches Patentamt / European Patent Office / Office européen des brevets**

(11) **EP 3 902 647 B1**

(12) # EUROPÄISCHE PATENTSCHRIFT

(45) Veröffentlichungstag und Bekanntmachung des Hinweises auf die Patenterteilung:
**12.10.2022  Patentblatt 2022/41**

(21) Anmeldenummer: **19817317.1**

(22) Anmeldetag: **12.12.2019**

(51) Internationale Patentklassifikation (IPC):
**B23K 9/09** (2006.01)     **B23K 9/095** (2006.01)
**B23K 9/173** (2006.01)

(52) Gemeinsame Patentklassifikation (CPC):
**B23K 9/173; B23K 9/092; B23K 9/0953**

(86) Internationale Anmeldenummer:
**PCT/EP2019/084889**

(87) Internationale Veröffentlichungsnummer:
**WO 2020/136019 (02.07.2020 Gazette 2020/27)**

(54) **VERFAHREN ZUM STEUERN EINES SCHWEISSPROZESSES MIT EINER ABSCHMELZENDEN ELEKTRODE, UND EINE SCHWEISSVORRICHTUNG MIT EINER SOLCHEN STEUERUNG**

METHOD OF CONTROLLING A WELDING PROCESS USING A CONSUMABLE ELECTRODE, AND APPARATUS FOR WELDING WITH SUCH CONTROLLER

MÉTHODE DE CONTRÔLE D'UN PROCÉDÉ DE SOUDAGE UTILISANT UNE ÉLECTRODE CONSOMMABLE, ET APPAREIL DE SOUDAGE AVEC UN TEL CONTRÔLEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.12.2018  EP 18248057**

(43) Veröffentlichungstag der Anmeldung:
**03.11.2021  Patentblatt 2021/44**

(73) Patentinhaber: **FRONIUS INTERNATIONAL GmbH 4643 Pettenbach (AT)**

(72) Erfinder:
• **SÖLLINGER, Dominik**
  **4631 Krenglbach (AT)**
• **MAYER, Manuel**
  **4650 Edt bei Lambach (AT)**
• **WALDHÖR, Andreas**
  **4643 Pettenbach (AT)**
• **KOGLER, Angelika**
  **4600 Thalheim bei Wels (AT)**

(74) Vertreter: **Patentanwälte Pinter & Weiss OG Prinz-Eugen-Straße 70 1040 Wien (AT)**

(56) Entgegenhaltungen:
**EP-A2- 0 005 134       WO-A1-2005/042199**
**WO-A1-2018/043626       US-A1- 2012 255 940**
**US-A1- 2014 124 491**

**EP 3 902 647 B1**

**Beschreibung**

Die Erfindung betrifft ein Verfahren zum Steuern eines Schweißprozesses mit einer abschmelzenden Elektrode, bei dem nach dem Zünden eines Lichtbogens zwischen der Elektrode und einem Grundstoff zumindest zwei unterschiedliche zeitlich sequentielle Schweißphasen verwendet werden, wobei während einer Kaltphasendauer eine Kaltschweißphase verwendet wird und während einer darauffolgenden Warmphasendauer eine Warmschweißphase verwendet wird, wobei in der Kaltschweißphase zumindest ein Kurzschlusszyklus mit einer Kurzschlusszykluszeit durchgeführt wird und wobei nach der Kaltschweißphase in die Warmschweißphase gewechselt wird.

Die Erfindung betrifft weiters eine Schweißvorrichtung zum Durchführen eines Schweißprozesses, die zumindest einer Steuerungseinheit zum Steuern des Schweißprozesses, einen Schweißbrenner und zumindest einer Vorschubeinheit zum Zuführen einer abschmelzenden Elektrode zum Schweißbrenner aufweist, wobei die Steuerungseinheit zumindest dazu vorgesehen ist, während einer Kaltphasendauer eine Kaltschweißphase durchzuführen und während einer darauffolgenden Warmphasendauer eine Warmschweißphase durchzuführen, wobei in der Kaltschweißphase zumindest ein Kurzschlusszyklus mit einer Kurzschlusszykluszeit vorgesehen ist und wobei die Steuerungseinheit dazu vorgesehen ist, nach der Kaltschweißphase in die Warmschweißphase zu wechseln.

Metall-Schutzgas-Schweißprozesse (MSG) sind seit vielen Jahren im Stand der Technik bekannt. Dazu zählen z.B. das Metall-Inert-Gas Verfahren (MIG) oder auch das Metall-Aktiv-Gas Verfahren (MAG) bei welchen eine abschmelzende Elektrode aus einem metallischen Elektrodenwerkstoff von einem sogenannten Schutzgas umgeben wird. Metall-Schutzgas-Schweißprozesse werden in der Regel entweder dazu verwendet, auf einen Grundwerkstoff eine Schweißnaht aufzubringen (Auftragsschweißen) oder dazu, zwei Grundwerkstoffe zu verbinden (Verbindungsschweißen). In beiden Fällen wird mittels einer elektrischen Spannung bzw. einem daraus resultierenden elektrischen Strom ein Lichtbogen zwischen der Elektrode und dem Grundwerkstoff gezündet, welcher die Elektrode und den, die Elektrode umgebenden Bereich des Grundwerkstoffs abschmilzt, wodurch eine stoffschlüssige Verbindung hergestellt wird. Als Elektrodenmaterial wird üblicherweise dasselbe oder ein ähnliches Material wie für den Grundwerkstoff verwendet. Die Elektrode wird mit einer bestimmten Elektroden-Vorschubgeschwindigkeit der Schweißstelle zugeführt, wobei die Elektroden-Vorschubgeschwindigkeit fest vorgegeben werden kann, z.B. beim manuellen Schweißen per Hand oder durch Einstellung am Schweißgerät oder auch von anderen Parametern abhängig sein kann, beispielsweise von einer Schweißgeschwindigkeit, mit der die Elektrode relativ zum Grundwerkstoff bewegt wird oder in Abhängigkeit des Stroms, etc.

Das Schutzgas dient dazu, den Lichtbogen und den Bereich der Schmelze von der Atmosphäre abzuschirmen, im Wesentlichen um eine Oxidation zu vermeiden. Als Schutzgas wird entweder ein inertes Gas (MIG) oder ein aktives Gas (MAG) verwendet. Inerte Gase, beispielsweise Helium (He) oder Argon (Ar), sind solche Gase, die keine chemischen Reaktionen mit der Schmelze eingehen. Das MIG-Verfahren wird vorwiegend für Nichteisenmetalle und hochlegierte Stähle genutzt. Aktive Gase, wie beispielsweise Kohlendioxid ($CO_2$) oder Sauerstoff (O) sind reaktionsfreudige Gase, die verwendet werden, um die Zusammensetzung der Schmelze bewusst zu verändern. Sie werden bevorzugt für unlegierte und niedriglegierte Stähle verwendet.

Seit vielen Jahren wird für MSG-Schweißverfahren bzw. Kurzschlussschweißverfahren das sogenannte Kalt-Metall-Transfer-Verfahren (auch Cold-Metal-Transfer bzw. CMT-Verfahren) erfolgreich angewendet. Aufbauend darauf gibt es das CMT-Mix Verfahren bei dem alternierend eine Kaltschweißphase, insbesondere eine Kurzschluss-Schweißphase mit relativ geringem Wärmeeintrag, in der eine Vorwärts- und einer Rückwärtsbewegung des Schweißdrahtes erfolgt, und eine Warmschweißphase mit relativ dazu hohem Wärmeeintrag (z.B. Impulsschweißphase oder Sprühschweißphase) verwendet wird. Details dazu sind dem Fachmann bekannt.

Der Vorteil dieses Verfahrens im Vergleich zu herkömmlichen Verfahren (z.B. reines Impulsschweißen) besteht darin, dass durch die geregelte Stromzufuhr und die unterstützende Wirkung der Drahtbewegung beim Werkstoffübergang nur ein sehr niedriger Wärmeeintrag auf den Grundwerkstoff erfolgt. Das CMT-Mix Verfahren wird unter anderem für Metall-Misch-Verbindungen verwendet, beispielsweise für die Verbindung von Stahl und Aluminium.

Bisher wurden die Schweißphasen mit hohem Wärmeeintrag (Impulsschweißphase) und die Schweißphasen mit niedrigem Wärmeeintrag (Kurzschluss-Schweißphase bzw. Kurzschlussschweißprozess) im Wesentlichen beliebig kombiniert, wie z.B. in der WO 2005/042199 A1 der Anmelderin offenbart ist. Dabei wird der Beginn der Kurzschluss-Schweißphase beispielsweise in Abhängigkeit der Anzahl der Impulse der Impulsschweißphase, in Abhängigkeit der Zeitdauer der Impulsschweißphase oder durch ein Triggersignal ausgelöst. Die Dauer der verschiedenen Schweißphasen unterschiedlichen Wärmeeintrags können beispielsweise durch ein prozentuales Verhältnis festgelegt werden, wie z.B. Anzahl der Impulse der Impulsschweißphase zu Anzahl der Impulse bzw. Zyklen der Kurzschluss-Schweißphase. Die Zeitdauer der Schweißphasen kann auch abhängig vom eingestellten Schweißstrom sein, z.B. eine längere Kurzschluss-Schweißphase bei geringem Schweißstrom und eine kürzere Kurzschluss-Schweißphase bei höherem Schweißstrom.

In der Regel wird für die Kurzschluss-Schweißphase eine Anzahl von Kurzschlusszyklen festgelegt, wobei jeder Kurzschluss-Zyklus eine bestimmte Kurzschlusszykluszeit zur Durchführung benötigt. Die gesamte Dauer der Kurzschluss-Schweißphase ist folglich durch die Summe der Kurzschlusszykluszeiten der einzelnen Kurzschlusszyklen definiert. Beispielsweise kann eine Auswahl von zehn Kurzschlusszyklen an einer Steuerungseinheit ausgewählt werden, die jeweils eine Zykluszeit von, beispielsweise ca. 10ms aufweisen. Die gesamte Dauer der Kurzschluss-Schweißphase wäre demnach 100ms (10 Zyklen x 10ms Zykluszeit). Die Dauer der nachfolgenden Impulsphase (oder allgemein Warmschweißphase) wird in der Regel durch Vorgabe einer Impulsphasenzeit bzw. Warmphasenzeit festgelegt. Die Kurzschlusszykluszeit der Kurzschlusszyklen der Kurzschluss-Schweißphase ist beim Schweißen aber nicht immer konstant, das bedeutet, ein erster Kurzschluss-Zyklus kann z.B. 10ms dauern, ein zweiter Kurzschluss-Zyklus 12ms, ein dritter Kurzschluss-Zyklus 9ms, usw. Das kann beispielsweise von der Lage und Geometrie der Schweißnaht abhängig sein. Kann aber auch dadurch begründet sein, dass der Zeitpunkt des Kurzschlusses variiert. Bei einer geringen voreingestellten Anzahl von Kurzschlusszyklen von beispielsweise 3 Zyklen je Kurzschluss-Schweißphase, hat das relativ geringe Auswirkungen. Wird aber eine höhere Anzahl von Kurzschlusszyklen gewählt, beispielsweise 5-10 Kurzschlusszyklen je Kurzschluss-Schweißphase, kann dies durchaus zu erheblichen zeitlichen Schwankungen in der Gesamtdauer einer Kurzschluss-Schweißphase führen. Das kann bedeuten, dass eine erste Kurzschluss-Schweißphase mit 10 Zyklen beispielsweise nicht 100ms dauert, sondern nur 80ms und eine zweite Kurzschluss-Schweißphase mit 10 Zyklen nicht 100ms dauert, sondern 120ms. Dies ist nachteilig, da sich diese unterschiedlichen Dauern der Kurzschluss-Schweißphase negativ auf das Schuppenbild der Schweißnaht und damit auf die Qualität der Schweißnaht, auswirken. Insbesondere führen solche Schwankungen zu einem ungleichmäßigen Schuppenbild, wobei die Dauer der Kurzschluss-Schweißphase im Wesentlichen mit der Länge einer Schuppe korreliert (bei konstanter Schweißgeschwindigkeit).

WO 2018/043626 A1 (Basis für den Oberbegriff der Ansprüche 1 und 8) offenbart ein Schweißverfahren, bei dem drei verschiedene Schweißphasen mit unterschiedlichem Wärmeeintrag in den Grundstoff verwendet werden. Um ein ungleichmäßiges Schuppenbild zu vermeiden, ist vorgesehen, dass die zeitliche Dauer einer Kurzschlussphase angepasst wird.

US 2014/124491 A1 offenbart D2 ein Verfahren zur Steuerung des Wärmeeintrags in ein Werkstück während eines Schweißprozesses unter Verwendung eines Temperatursensors. US 2012/0255940 A1 offenbart einen Schweißprozess zur Reduzierung von Schweißspritzern, wobei eine Steigung eines Anstiegs des Schweißstroms in der Kurzschlussphase variiert wird.

Es ist deshalb eine Aufgabe der Erfindung, einen Schweißprozess, bei dem sich eine Kaltschweißphase mit einer vorgebbaren Anzahl von Kurzschlusszyklen und eine Warmschweißphase mit relativ zur Kaltschweißphase höherem Wärmeeintrag in den Grundstoff periodisch abwechseln, bereitzustellen, der die Erzeugung einer Schweißnaht mit einem möglichst gleichmäßigen Schuppenbild ermöglicht.

Erfindungsgemäß wird die Aufgabe dadurch gelöst, dass eine bestimmte Anzahl von Kurzschlusszyklen für die Kaltschweißphase vorgegeben wird und dass die Kaltphasendauer der Kaltschweißphase bei einer, eine vorgegebene Grenzzyklenzahl überschreitenden Anzahl von Kurzschlusszyklen in Abhängigkeit einer ermittelten Kaltphasenzeit bestimmt wird, wobei zur Bestimmung der Kaltphasendauer in Abhängigkeit der Kaltphasenzeit ein zum Zeitpunkt des Ablaufs der Kaltphasenzeit ein bereits gestarteter Kurzschlusszyklus beendet wird, bevor in die Warmschweißphase gewechselt wird (siehe Anspruch 1). Durch die Umstellung auf eine Zeitabfrage können die Schwankungen der Kaltphasendauer, die insbesondere bei einer größeren Anzahl von Kurzschlusszyklen nachteilig auftreten, verringert werden und es kann ein sehr gleichmäßiges Schuppenbild einer Schweißnaht erreicht werden. Durch die Beendigung des bereits gestarteten Kurzschlusszyklus' wird gewährleistet, dass ein laufender Kurzschlusszyklus nicht unterbrochen wird, was das Schuppenbild der Schweißnaht weiter verbessert.

Vorzugsweise wird zur Bestimmung der Kaltphasendauer in Abhängigkeit der Kaltphasenzeit vor Ende der Kaltphasenzeit ein Toleranzzeitpunkt vorgegeben, ab dem der Start eines neuen Kurzschlusszyklus unterlassen wird, wobei ein zum Toleranzzeitpunkt durchgeführter Kurzschlusszyklus abgeschlossen wird, bevor in die Warmschweißphase gewechselt wird. Dadurch kann gewährleistet werden, dass kein neuer Kurzschlusszyklus mehr gestartet wird, wenn das Ende der Kaltphasenzeit auf einen Zeitpunkt fallen würde, der sich kurz nach dem Beginn eines neuen Kurzschlusszyklus befindet. Damit können Schwankungen in der Kaltphasendauer weiter verringert werden.

Die Grenzzyklenzahl wird vorzugsweise zwischen eins und dreißig, insbesondere zwischen fünf und zehn gewählt. In diesem Bereich konnten gute Ergebnisse erzielt werden. Bevorzugterweise wird die Kaltphasenzeit festgelegt, indem die Anzahl der vorgegebenen Kurzschlusszyklen mit einer Durchschnitts-Kurzschlusszykluszeit multipliziert wird, wobei die Durchschnitts-Kurzschlusszykluszeit vorzugsweise zwischen fünf und fünfzehn Millisekunden festgelegt wird, insbesondere zehn Millisekunden. Durch die Verwendung einer Durchschnitts-Kurzschlusszykluszeit können z.B. Erfahrungswerte oder experimentell ermittelte Messwerte aus Schweißprozessen verwendet werden.

Vorteilhafterweise wird zur Reduzierung von Spritzern die Elektrode je Kurzschlusszyklus jeweils einmal bis zur Berührung des Grundstoffs in Richtung des Grundstoffs bewegt und danach, nach Bildung eines Kurzschlusses, vorzugsweise in entgegengesetzter Richtung vom Grundstoff weg bewegt.

Bevorzugterweise wird als Schweißstrom in der Warmschweißphase ein gepulster Schweißstrom verwendet, wodurch die Wärmeeinbringung in den Grundstoff erhöht werden kann. Damit kann in der Warmschweißphase ein Impulsschweißprozess oder Sprühschweißprozess verwendet werden.

Vorzugsweise wird die Kaltphasendauer der Kaltschweißphase bei einer, der vorgegebenen Grenzzyklenzahl entsprechenden oder die vorgegebene Grenzzyklenzahl unterschreitenden Anzahl von Kurzschlusszyklen durch eine Summe der Kurzschlusszykluszeiten der vorgegebenen Anzahl von Kurzschlusszyklen bestimmt. Dadurch kann bei einer relativ kleinen Anzahl von Kurzschlusszyklen in herkömmlicher Weise geschweißt werden, da sich die Schwankungen weniger stark auf das Schuppenbild der Schweißnaht auswirkt.

Die Aufgabe wird weiters mit einer eingangs genannten Schweißvorrichtung dadurch gelöst, dass die Steuerungseinheit die Kaltphasendauer der Kaltschweißphase steuert, wobei eine bestimmte Anzahl von Kurzschlusszyklen für die Kaltschweißphase vorgegeben ist und die Kaltphasendauer der Kaltschweißphase bei einer, die vorgegebene Grenzzyklenzahl überschreitenden Anzahl von Kurzschlusszyklen von einer bestimmten Kaltphasenzeit abhängig ist, wobei die Steuerungseinheit vorgesehen ist, zur Bestimmung der Kaltphasendauer einen zum Zeitpunkt des Ablaufs der Kaltphasenzeit bereits gestarteten Kurzschlusszyklus vor dem Wechsel in die Warmschweißphase abzuschließen (siehe Anspruch 8).

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt

Fig.1 einen standardisierten Aufbau einer Schweißvorrichtung,
Fig.2 schematischer Ablauf eines Schweißverfahrens,
Fig.3 ein Werkstück mit einer Schweißnaht,
Fig.4a-4c jeweils einen schematischen zeitlichen Verlauf eines Schweißparameters des erfindungsgemäßen Schweißverfahrens.

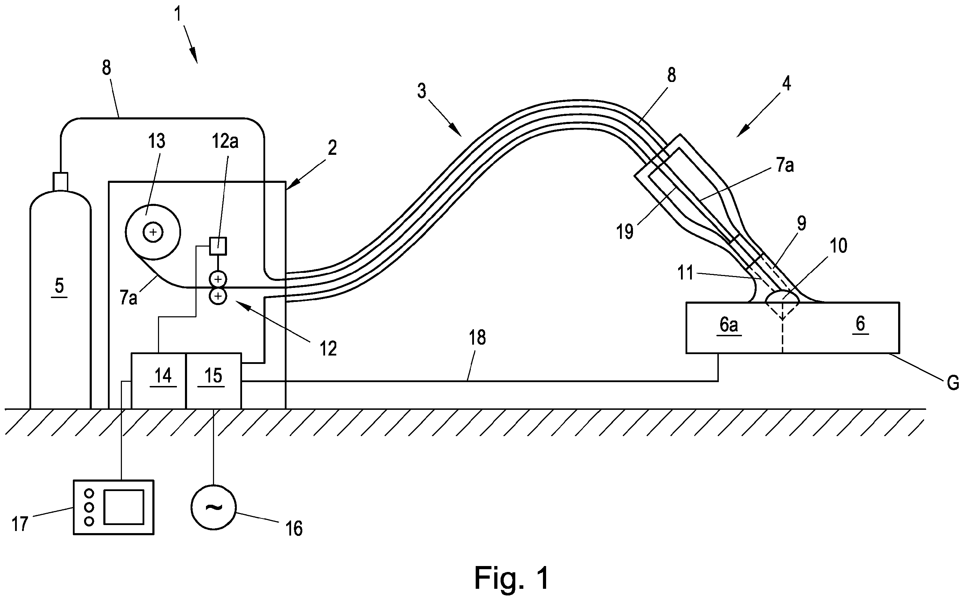

In Fig.1 ist eine Metall-Schutzgas (MSG) Schweißvorrichtung 1 schematisch dargestellt. Die Schweißvorrichtung 1 weist eine Schweißstromquelle 2, ein Schlauchpaket 3, einen Schweißbrenner 4 und einen Schutzgasbehälter 5 mit einem Schutzgas SG auf. Der Schutzgasbehälter 5 ist mittels einer Schutzgasleitung 8 mit dem Schweißbrenner 4 verbunden. Am Schutzgasbehälter 5 oder in der Schutzgasleitung 8 kann ein nicht dargestellter Druckregler, beispielsweise in Form einer bekannter Flaschenarmatur, vorgesehen sein, der in der Regel dazu dient, den Durchfluss des Schutzgases SG zu regeln. In der Schweißstromquelle 2 kann eine Schweiß-Elektrode 7 in Form eines Schweißdrahtes 7a angeordnet sein, der üblicherweise auf einer Schweißdraht-Rolle 13 aufgewickelt ist. Zum Abwickeln des Schweißdrahtes 7a und insbesondere zum Zuführen des Schweißdrahtes 7a zu einer Schweißstelle ist eine Vorschubeinheit 12 angeordnet, die von einer Vorschub-Antriebseinheit 12a angetrieben wird.

Der Schweißdraht 7a auf der Schweißdraht-Rolle 13 kann aber auch außerhalb der Schweißstromquelle 2 in einer davon getrennten Einheit angeordnet sein. Die Vorschub-Antriebseinheit 12 wird von einer Steuerungseinheit 14 angesteuert, welche wiederum in der Regel mit einer Benutzerschnittstelle 17 kommuniziert. Über die Benutzerschnittstelle 17 können von einem Benutzer bestimmte Schweißparameter vorgegeben werden, wie z.B. eine Schweißspannung U, ein Schweißstrom I, eine Drahtvorschubgeschwindigkeit vd, etc. Es können beispielsweise auch vordefinierte Schweißprogramme mit bestimmten voreingestellten Schweißparametern in der Steuerungseinheit 14 hinterlegt sein, welche vom Benutzer über die Benutzerschnittstelle 17 ausgewählt werden können. In der Schweißstromquelle 2 ist weiters ein Leistungsteil 15 angeordnet, das von der Steuerungseinheit 14 gesteuert (oder geregelt) wird und die an eine externe Spannungsversorgung 16 angeschlossen ist.

Der Leistungsteil 15 der Schweißstromquelle 2 versorgt den Schweißbrenner 4 mit dem benötigten Schweißstrom I über eine im Schlauchpaket 3 angeordnete Stromleitung 19. Daneben werden dem Schweißbrenner 4 über das Schlauchpaket 3 üblicherweise auch der Schweißdraht 7a (mittels der Vorschubeinheit 12) und das Schutzgas SG, und gegebenenfalls auch ein Kühlmedium zum Kühlen des Schweißbrenners 4, zugeführt. Im Schlauchpaket können darüber hinaus auch Steuerleitungen vorgesehen sein. Es können aber als Schlauchpaket 3 mehrere einzelne Leitungen für die jeweiligen Medien, Steuerungen und Energien vorgesehen sein. Insbesondere zur Durchführung des eingangs genannten CMT -Schweißprozesses kann auch eine (nicht dargestellte) separate Drahtvorschubeinheit am Schweißbrenner 4 vorgesehen sein, welche dazu geeignet ist, den Drahtvorschub in der Kaltschweißphase möglichst schnell zwischen positivem Drahtvorschub im Lichtbogen (in Richtung zum Werkstück 6) und negativem Drahtvorschub im Kurzschluss (in Richtung vom Werkstück 6 weg) zu ändern.

Um einen Schweißprozess durchzuführen wird einem Werkstück 6 aus einem Grundstoff G mittels einer Stromleitung 18 ein erstes elektrisches Potential angelegt und über die Stromleitung 19 an den Schweißdraht 7a als Schweißelektrode ein zweites elektrisches Potential angelegt, wodurch nach Zünden eines Lichtbogens 11 zwischen Schweißdraht 7a und dem Werkstück 6 ein Schweißstrom I fließt. Mittels des Lichtbogens 11 wird der Schweißdraht 7a und ein Bereich des Grundstoffs G abgeschmolzen, wodurch sich eine stoffschlüssige Verbindung zwischen dem Schweißdraht 7a und dem Grundstoff G ergibt. Im dargestellten Beispiel wird eine Schweißnaht 10 auf das Werkstück 6 aufgeschweißt, man spricht vom sogenannten Auftragsschweißen. Es könnten aber auch zwei Werkstücke 6, 6a verbunden werden, wie durch die gestrichelte Linie symbolisiert ist, man spricht dann vom sogenannten Verbindungsschweißen. Der Lichtbogen 11 wird von dem aus dem Schweißkopf 4 ausströmenden Schutzgas in Form einer Schutzgasglocke 9 umströmt, um den Bereich das geschmolzene Material im Bereich der Schweißnaht 10 von der Umgebung abzuschirmen. Es sei aber angemerkt, dass grundsätzlich auch ohne Schutzgas geschweißt werden könnte. In diesem Fall könnte auch auf einen Schutzgasbehälter 5 und auf eine Schutzgasleitung 8 verzichtet werden.

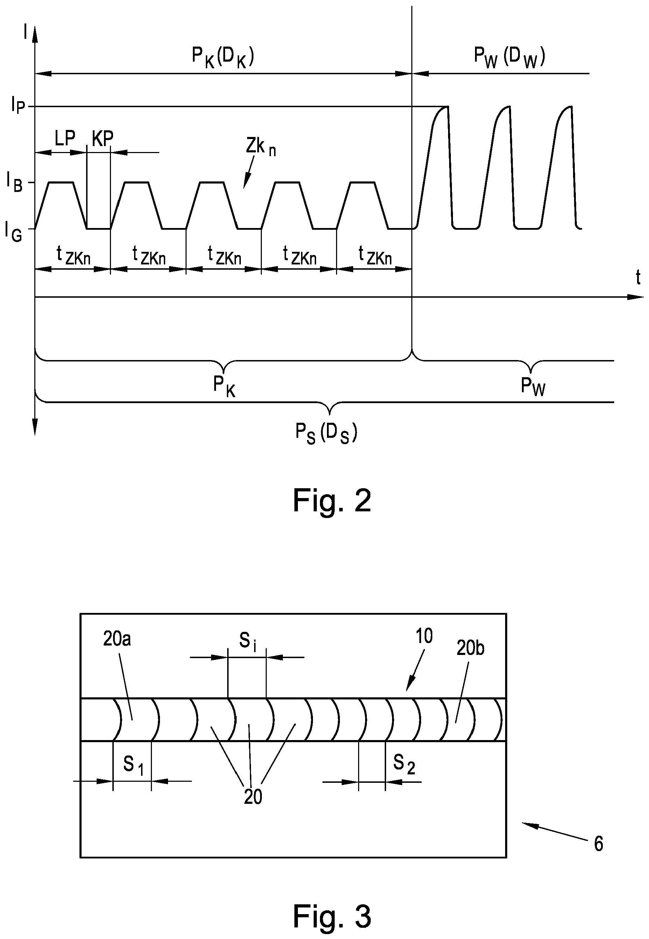

Wie eingangs erwähnt, werden je nach Material des Grundstoffs G üblicherweise entweder reaktionsarme inerte Schutzgase SGi wie beispielsweise Argon (Ar) oder Helium (He) verwendet oder es werden aktive Schutzgase SGa wie z.B. Sauerstoff (O) oder Kohlendioxid (CO2) verwendet. Der Schweißdraht 7a wird der Schweißstelle mit einer bestimmten Drahtvorschubgeschwindigkeit $v_d$ zugeführt, welche von mehreren Einflussgrößen abhängig sein kann. Beim manuellen Schweißen, bei dem der Schweißkopf 4 von einer Person per Hand geführt wird, wird in der Regel eine konstante Drahtvorschubgeschwindigkeit $v_d$ beispielsweise in Abhängigkeit des eingestellten Schweißstroms I gewählt. Bei automatisierten Schweißvorgängen, beispielsweise wenn der Schweißkopf 4 von einem Roboter geführt wird, kann die Drahtvorschubgeschwindigkeit $v_d$ z.B. zusätzlich in Abhängigkeit einer Schweißgeschwindigkeit $v_s$ gewählt werden, mit welcher der Schweißkopf 4 relativ zum Werkstück 6 bewegt wird. Natürlich kann es auch noch andere Einflussgrößen und Schweißparameter geben oder andere Ausführungen der MSG-Schweißvorrichtung 1. Das grundsätzliche bekannte Prinzip bleibt allerdings gleich, weshalb an dieser Stelle keine detailliertere Beschreibung erfolgt. Das erfindungsgemäße Verfahren wird nachfolgend anhand Fig.2 näher beschrieben.

Fig.2 zeigt einen beispielhaften, schematischen Verlauf des Schweißstromes I eines Schweißprozesses über der Zeit t mit zwei Schweißphasen, mit üblicherweise verschiedenen Wärmeeinträgen in den Grundstoff G eines Werkstücks 6. Dabei wechseln sich eine Kaltschweißphase $P_K$ mit niedrigem Wärmeeintrag, und eine Warmschweißphase Pw, mit relativ dazu höherem Wärmeeintrag, zeitlich ab. In der Warmschweißphase Pw kann ein konstanter Schweißstrom I vorgesehen sein, oder es kann ein gepulster Schweißstrom I vorgesehen sein, wie in Fig.2 dargestellt wobei man dann in der Regel von einer Impulsschweißphase spricht. Die Kaltschweißphase $P_K$ wird während einer Kaltphasendauer $D_K$ durchgeführt und die Warmschweißphase Pw während einer Warmphasendauer Dw.

Die Kaltschweißphase $P_K$ und die Warmschweißphase Pw bilden zusammen einen Gesamt-Schweißzyklus $P_S$ mit einer Gesamt-Schweißzyklusdauer $D_S$ aus. Während des Schweißens werden kontinuierlich eine Vielzahl solcher Gesamt-Schweißzyklen Ps hintereinander durchgeführt. In der Kaltschweißphase $P_K$ wird das eingangs beschriebene KurzschlussSchweißverfahren verwendet, das sich durch eine reversierende Drahtvorschubgeschwindigkeit auszeichnet, wobei sich die Richtung der Drahtvorschubgeschwindigkeit auch ändern kann. Da das Schweiß-Verfahren mit Kurzschluss-Schweißphase als Kaltschweißphase $P_K$ und Pulsschweißphase als Warmschweißphase Pw bekannt ist, wird hier nur kurz darauf eingegangen.

Beispielsweise wird der Schweißdraht 7a zu Beginn der Kaltschweißphase $P_K$ (entspricht z.B. dem Ende der vorhergehenden Warmschweißphase Pw von einer Ausgangsposition (z.B. einem vorgegebenen Elektrodenabstand des Schweißdrahtes 7a vom Werkstück 6) mit einer bestimmten Drahtvorschubgeschwindigkeit in Richtung des Werkstücks 6 gefördert bis der Schweißdraht 7a das Werkstück 6 berührt. Während des Anschmelzens des Schweißdrahtes 7a wird die Drahtvorschubgeschwindigkeit kurzzeitig auf eine definierte Maximal-Drahtvorschubgeschwindigkeit erhöht. Dabei kann auch der Schweißstrom I gleichzeitig von einem hohen Schweißstrom I, einem sogenannten Boost-Strom $I_B$ auf einen relativ zum Boost-Strom $I_B$ geringeren Strom I, einem sogenannten Warte-Strom $I_G$ gesenkt werden bis der Kurzschluss erreicht wird. Danach erfolgt vorzugsweise eine Richtungsumkehr des Drahtvorschubes mit einer Drahtvorschubgeschwindigkeit, d.h. der Schweißdraht 7a wird vom Werkstück 6 weg bewegt und der Warte-Strom $I_G$ wird wieder auf den Boost-Strom $I_B$ erhöht usw.

Das Zurückbewegen des Schweißdrahtes 7 weg vom Werkstück 6 ist aber nicht zwingend erforderlich, ein Kurzschlusszyklus $Z_{Kn}$ könnte grundsätzlich auch ohne ein Zurückbewegen des Schweißdrahtes 7 durchgeführt werden und würde dann mit dem erneuten Erhöhen des Schweißstroms I vom Warte-Strom $I_G$ auf den Boost-Strom $I_B$ enden. Das Zurückbewegen ist aber vorteilhaft, um das Ablösen der Schweißtropfen vom Schweißdraht 7 zu erleichtern, wodurch weniger Spritzer entstehen. Allgemein besteht ein Kurzschlusszyklus $Z_{Kn}$ aus einer Lichtbogenphase LP und einer Kurzschlussphase KP, wie in Fig.2 angedeutet, wobei während eines Kurzschlzsszyklus $Z_{Kn}$ die Elektrode, insbesondere der Schweißdraht 7a zumindest einmal bis zur Berührung des Grundstoffs G, in der Regel in Richtung des Grundstoffs G, bewegt wird. Die Kaltschweißphase $P_K$ setzt sich aus einer Anzahl $n \geq 1$ von Kurzschlusszyklen $Z_{Kn}$ zusammen, im dargestellten Beispiel sind dies z.B. fünf Kurzschlusszyklen $Z_{Kn}$, bevor wieder in die Warmschweißphase Pw übergegangen wird. Jeder Kurzschlusszyklus $Z_{Kn}$ nimmt dabei eine bestimmte Kurzschlusszykluszeit $t_{ZKn}$ in Anspruch, eine durchschnittliche Kurzschlusszykluszeit $t_{ZKn}$ beträgt beispielsweise im Bereich von 10ms. In der Warmschweißphase Pw kann der Schweißstrom I pulsartig vom Warte-Strom $I_G$ auf einen Pulsstrom $I_P$ erhöht und wieder abgesenkt werden. Nach der Warmschweißphase Pw folgt wieder eine neue Kaltschweißphase $P_K$ usw.

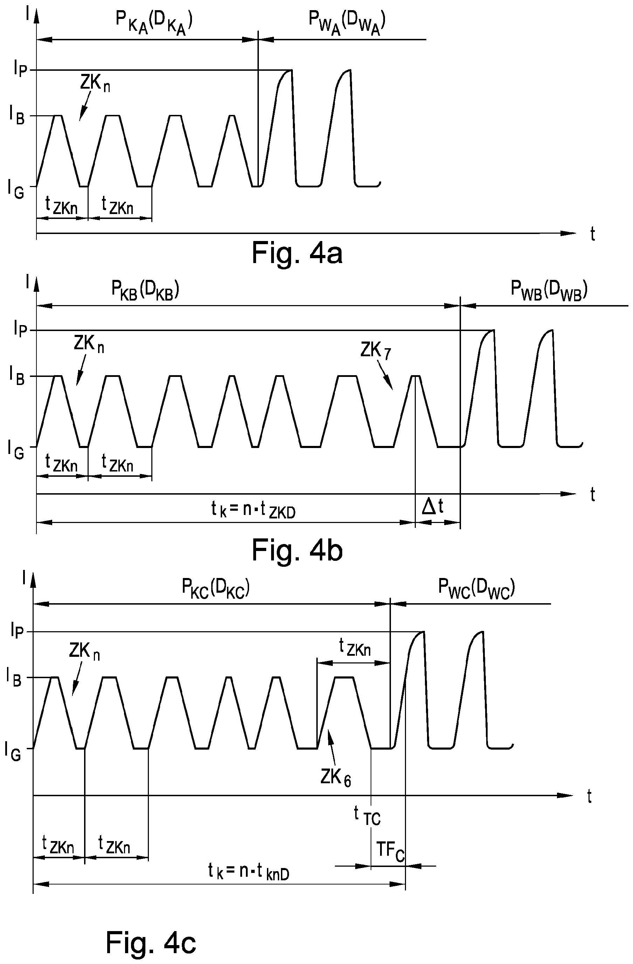

Dabei sei an dieser Stelle nochmals angemerkt, dass die dargestellten Verläufe in Fig.2 und nachfolgend in Fig.4a-4c nur schematische Beispiele sind und damit nicht als einschränkend für die Erfindung zu verstehen sind. Der Verlauf eines Schweißparameters, hier des Schweißstroms I, während der Kaltschweißphase $P_K$ und der Warmschweißphase Pw ist beispielsweise in der Praxis in der Regel nicht so gleichmäßig wie dargestellt. Insbesondere kann sich z.B. die Form einzelner Amplituden natürlich unterscheiden. Auch der Warte-Strom $I_G$, der Boost-Strom $I_B$ und der Pulsstrom $I_P$ können natürlich gewissen Schwankungen unterliegen. Der Warte-Strom $I_G$ in der Kaltschweißphase $P_K$ muss natürlich auch nicht gleich hoch sein wie in der Warmschweißphase Pw, so wie dargestellt, sondern könnte in der Warmschweißphase Pw auch höher oder geringer sein als in der Kaltschweißphase $P_K$. Analog ist natürlich auch die dargestellte Länge einzelner Kurzschlusszyklen $Z_{Kn}$ auf der Zeitachse, also die Kurzschlusszykluszeiten $t_{ZKn}$ nicht einschränkend zu verstehen. Ebenso wenig ist das dargestellte zeitliche Verhältnis zwischen Lichtbogenphase LP und Kurzschlussphase KP sowie das Verhältnis zwischen der Kurzschlusszykluszeiten $t_{ZKn}$ und der Länge der Impulse der Warmschweißphase Pw einschränkend zu verstehen.

Die Länge der Kaltphasendauer $D_K$ und der Warmphasendauer Dw werden üblicherweise über die Benutzerschnittstelle 17 vorgegeben. Beispielsweise kann dies durch eine direkte Vorgabe einer Warmphasenzeit tw von beispielsweise 150 ms für die Warmphasendauer Dw erfolgen, z.B. durch einen Benutzer. Die Länge der Kaltphasendauer $D_K$ kann dann z.B. in Abhängigkeit der gewählten Warmphasendauer Dw automatisch erfolgen, beispielsweise in Form eines prozentualen Anteils an der Warmphasendauer Dw. Die Vorgabe der Kaltphasendauer $D_K$ könnte aber ebenfalls direkt durch einen Benutzer erfolgen, in der Regel geschieht dies durch Vorgabe der Anzahl n von Kurzschlusszyklen $Z_{Kn}$. Die Kurzschlusszykluszeiten $t_{ZKn}$ unterliegen aber in der Regel gewissen Schwankungen, sodass nicht jeder Kurzschlusszyklus gleich lange dauert. Eine Durchschnitts-Kurzschlusszykluszeit $t_{ZKD}$ (nicht dargestellt) beträgt üblicherweise im Bereich von 10 ms. Das bedeutet, dass eine erste Kurzschlusszykluszeit $t_{ZK1}$ eines ersten Kurzschlusszyklus $Z_{K1}$ beispielsweise 12 ms betragen kann und eine zweite Kurzschlusszykluszeit $t_{ZK2}$ eines zweiten nachfolgenden Kurzschlusszyklus $Z_{K2}$ beispielsweise 8 ms betragen kann. Dementsprechend kann die gesamte Kaltphasendauer $D_K$, die sich aus der Summe der einzelnen Kurzschlusszykluszeiten $t_{ZKn}$ zusammensetzt, im Bereich einiger Millisekunden schwanken, was unter Umständen nachteilig oder unerwünscht sein kann, wie nachfolgend anhand von Fig.3 näher erläutert wird.

In Fig.3 ist ein Werkstück 6 mit einer Schweißnaht 10 dargestellt, welche mittels des beschriebenen CMT-Mix Prozesses (bestehend aus Kaltschweißphase $P_K$ bzw. insbesondere Kurzschluss-Schweißphase und Warmschweißphase $P_W$ bzw. insbesondere Pulsschweißphase) hergestellt wurde. Die Schweißnaht 10 weist aneinandergereihte Schweißschuppen 20 auf, die sich aufgrund der Prozessführung ergeben. Die Gestalt der Schweißschuppen 20 und insbesondere die Schuppenlänge $s_i$ der Schweißschuppen 20 wird von mehreren Schweißparametern beeinflusst, insbesondere von der Schweißgeschwindigkeit des Schweißdrahtes 7a relativ zum Werkstück 6 und auch von der Gesamt-Schweißzyklusdauer Ds eines Gesamt-Schweißzyklus Ps. Die Gesamt-Schweißzyklusdauer $D_S$ setzt sich aus der Kaltphasendauer $D_K$ und der Warmphasendauer $D_W$ zusammen. Das bedeutet im Wesentlichen, je länger die Gesamt-Schweißzyklusdauer Ds ist, desto größer ist die Schuppenlänge $s_i$ der dazugehörigen Schweißschuppe 20. Daraus ist ersichtlich, dass insbesondere bei einer höheren Anzahl n von Kurzschlusszyklen $Z_{Kn}$ mit schwankenden Kurzschlusszykluszeiten $t_{ZKn}$, die Gesamt-Schweißzyklusdauer $D_S$ und folglich die Schuppenlänge $s_i$ ebenfalls gewissen Schwankungen unterliegen. Wenn beispielsweise, wie oben erwähnt, eine erste Kaltphasendauer $D_{K1}$ aufgrund von Schwankungen der Kurzschlusszykluszeiten $t_{ZKn}$ der ersten Kurzschlusszyklen $Z_{K1}$ beispielsweise 120 ms beträgt und eine zweite Kaltphasendauer $D_{K2}$ aufgrund von Schwankungen in den Kurzschlusszykluszeiten $t_{ZKn}$ eines zweiten nachfolgenden Kurzschlusszyklus $Z_{K2}$ beispielsweise 80 ms beträgt, bedeutet das, dass eine erste Gesamt-Schweißzyklusdauer $D_{S1}$ des ersten Gesamt-Schweißzyklus $P_{S1}$ (bei Annahme einer gleich langen Warmphasendauer $D_{W1}=D_{W2}$ für beide Gesamt-Schweißzyklen $P_{S1}$, $P_{S2}$) um 40 ms länger ist, als eine zweite Gesamt-Schweißzyklusdauer $D_{S2}$ des zweiten Gesamt-Schweißzyklus $P_{S2}$. Das würde, wie in Fig.3 schematisch dargestellt, zu einer im Vergleich zur ersten Schuppenlänge $s_1$ einer ersten Schweißschuppe 20a kürzeren zweiten Schuppenlänge $s_2$ einer zweiten Schweißschuppe 20b führen. Insgesamt würden solche Schwankungen damit zu einem ungleichmäßigen Schuppenbild der Schweißnaht 10 führen, was unter Umständen lokale Schwankungen einer Schweißnahtfestigkeit oder optische Mängel zur Folge hat und damit unerwünscht ist.

Erfindungsgemäß wird deshalb der Steuerungseinheit 14 eine Grenzzyklenzahl $n_G$ an Kurzschlusszyklen $Z_{Kn}$ vorgegeben, was beispielsweise über die Benutzerschnittstelle 17 erfolgen kann oder fest programmiert sein kann. Wenn die eingestellte Anzahl n von Kurzschlusszyklen $Z_{Kn}$ die festgelegte Grenzzyklenzahl $n_G$ überschreitet, wird die Kaltphasendauer $D_K$ der Kaltschweißphase $P_K$ in Abhängigkeit einer ermittelten Kaltphasenzeit $t_K$ automatisch von der Steuerungseinheit 14 eingestellt, wobei nach der Kaltschweißphase $P_K$ in die Warmschweißphase Pw gewechselt wird. Damit wird ab der vorgegebenen Grenzzyklenzahl $n_G$ nicht mehr wie bisher abgewartet, bis die vorgegebene Anzahl n von Kurzschlusszyklen $Z_{Kn}$ durchgeführt wurde, sondern es werden nur so viele Kurzschlusszyklen $Z_{Kn}$ durchgeführt, wie innerhalb der festgelegten Kaltphasenzeit $t_K$ auch tatsächlich durchgeführt werden können.

Vorzugsweise wird aber ein zum Zeitpunkt des Ablaufs der Kaltphasenzeit $t_K$ durchgeführter Kurzschlusszyklus $Z_{Kn}$ abgeschlossen, bevor in die Warmschweißphase Pw gewechselt wird, um zu vermeiden, dass ein gerade durchgeführter Kurzschlusszyklus $Z_{Kn}$ abrupt unterbrochen wird, was sich unter Umständen nachteilig auf die Qualität der Schweißnaht 10 auswirken könnte.

Wenn die vorgegebene Anzahl n von Kurzschlusszyklen $Z_{Kn}$ der vorgegebenen Grenzzyklenzahl $n_G$ entspricht oder die Grenzzyklenzahl $n_G$ unterschreitet, ist die Kaltphasendauer $D_K$ der Kaltschweißphase $P_K$ vorzugsweise durch eine Summe $\sum t_{ZKn}$ der Kurzschlusszykluszeiten $t_{ZKn}$ der vorgegebenen Anzahl n von Kurzschlusszyklen $Z_{Kn}$ bestimmt ($\sum t_{ZKn} = t_{ZK1} + t_{ZK2} + ... + t_{ZKn}$).

Die Grenzzyklenzahl $n_G$ kann beispielsweise zwischen eins und dreißig Kurzschlusszyklen $Z_{Kn}$ betragen, vorzugsweise zwischen fünf und zwölf Kurzschlusszyklen $Z_{Kn}$. Die Kaltphasenzeit $t_K$ wird in dem Fall, bei dem die Anzahl n der Kurzschlusszyklen $Z_{Kn}$ größer der festgelegten Grenzzyklenzahl $n_G$ ist vorzugsweise ermittelt, indem die eingestellte Anzahl n der Kurzschlusszyklen $Z_{Kn}$ mit einer Durchschnitts-Kurzschlusszykluszeit $t_{ZKD}$ multipliziert wird. Die Durchschnitts-Kurzschlusszykluszeit $t_{ZKD}$ kann dabei beispielsweise basierend auf Erfahrungswerten oder basierend auf zuvor experimentell ermittelten Messwerten festgelegt werden. Beispielsweise kann die Durchschnitts-Kurzschlusszykluszeit $t_{ZKD}$ zwischen fünf und fünfzehn Millisekunden betragen, insbesondere zehn Millisekunden. Die Durchschnitts-Kurzschlusszykluszeit $t_{ZKD}$ kann für die durchzuführende Schweißung als bekannt angesehen werden und kann beispielsweise im Schweißgerät oder in der Schweißgerätsteuerung hinterlegt sein, beispielsweise auch in Abhängigkeit von anderen Schweißparametern. Allgemein gilt damit für die Kaltphasendauer $D_K$:

$$D_K = \sum t_{ZKn} \text{ für } n \leq n_G \text{ und } D_K = t_K = t_{ZKD} * n \text{ für } n > n_G.$$

Gemäß einer weiteren vorteilhaften Ausgestaltung des Verfahrens wird vor Ende der Kaltphasenzeit $t_K$ ein Toleranzzeitpunkt $t_T$ festgelegt, ab dem der Start eines neuen Kurzschlusszyklus $Z_{Kn}$ unterlassen wird, wobei ein zum Toleranzzeitpunkt $t_T$ durchgeführter Kurzschlusszyklus $Z_{Kn}$ abgeschlossen wird, bevor in die Warmschweißphase Pw gewechselt wird. Dies ist insbesondere dann vorteilhaft, wenn kurz vor dem Ende der Kaltphasenzeit $t_K$ gerade ein neuer Kurzschlusszyklus $Z_{Kn}$ gestartet werden würde. Da dieser vorzugsweise abgeschlossen werden würde, bevor in die Warmschweißphase $P_W$ gewechselt werden würde, könnte dies in Summe zu einer übermäßigen Verlängerung der Kaltphasendauer $D_K$ führen, die sich im Bereich einer Kurzschlusszykluszeit $t_{ZKn}$ eines vollständigen Kurschlusszyklus $Z_{Kn}$ bewegen kann. Der Toleranzzeitpunkt $t_T$ kann beispielsweise im Bereich einiger Millisekunden (beispielsweise 5ms) vor Ende der Kaltphasenzeit $t_K$ gewählt werden.

Die Vorteile des Verfahrens sollen anhand des nachfolgenden Beispiels nochmal verdeutlicht werden. Es wird beispielhaft davon ausgegangen, dass ein CMT-Mix Schweißprozess mit einer Anzahl n=7 Kurzschlusszyklen $Z_{Kn}$ und einer daran anschließenden Warmphasendauer Dw mit einer bestimmten Warmphasenzeit tw von einem Benutzer über die Benutzerschnittstelle 17 ausgewählt wird. Das bedeutet, dass für die Dauer des Schweißvorganges mehrere Gesamt-Schweißzyklen Ps mit jeweils einer Kaltschweißphase $P_K$ und einer Warmschweißphase Pw durchgeführt werden. Die Warmphasenzeit tw der Warmphasendauer Dw ist in diesem Beispiel fest vorgegeben, die Kaltphasendauer $D_K$ würde ohne Vorgabe einer Grenzzyklenzahl $n_G$ wie beim herkömmlichen CMT- Mix-Verfahren der Summe $\sum t_{ZKn}$ der Kurzschlusszykluszeiten $t_{ZKn}$ der gewählten Anzahl n=7 von Kurzschlusszyklen $Z_{Kn}$ entsprechen.

Die erwähnten Schwankungen der einzelnen Kurzschlusszykluszeiten $t_{ZKn}$ können nun dazu führen, dass eine erste Kaltphasendauer $D_{K1}$ und folglich eine erste Gesamt-Schweißzyklusdauer $D_{S1}$ (erste Gesamt-Schweißzyklusdauer $D_{S1}$ = erste Kaltphasendauer $D_{K1}$ + erste Warmphasendauer $D_{W1}$) länger, gleich lange oder kürzer dauert wie eine später folgende zweite Kaltphasendauer $D_{K2}$ und folglich eine zweite Gesamt-Schweißzyklusdauer $D_{S2}$ (zweite Gesamt-Schweißzyklusdauer $D_{S2}$ = zweite Kaltphasendauer $D_{K2}$ + zweite Warmphasendauer $D_{W2}$), wobei die erste Warmphasendauer $D_{W1}$ und die zweite Warmphasendauer $D_{W2}$ im Wesentlichen gleich groß sind, beispielsweise je 100ms (vom Benutzer vorgegeben). Wenn die sieben Kurzschlusszyklen $Z_{Kn}$ der ersten Kaltschweißphase $P_{K1}$ aufgrund von Schwankungen beispielsweise jeweils eine relativ kurze (mittlere) Kurzschlusszykluszeit $t_{ZKn}$ = 8 ms aufweisen, würde dies zu einer ersten Kaltphasendauer $D_{K1}$ von 56 ms und folglich einer ersten Gesamt-Schweißzyklusdauer $D_{S1}$ von 156 ms führen. Wenn nun die sieben Kurzschlusszyklen $Z_{Kn}$ der zweiten Kaltschweißphase $P_{K2}$ aufgrund von Schwankungen beispielsweise jeweils eine relativ lange (mittlere) Kurzschlusszykluszeit $t_{ZKn}$ = 12 ms aufweisen, würde dies zu einer zweiten Kaltphasendauer $D_{K2}$ von 84 ms und folglich einer zweiten Gesamt-Schweißzyklusdauer $D_{S2}$ von 184 ms führen. Das ergibt eine Differenz von 28 ms zwischen den beiden Gesamt-Schweißzyklendauern $D_{S1}$, $D_{S2}$ was wie beschrieben zu einem ungleichmäßigen Schuppenbild der Schweißnaht führen würde.

Um dies zu vermeiden wird nun erfindungsgemäß eine Grenzzyklenzahl $n_G$ von beispielsweise $n_G$ = 5 festgelegt und eine Kaltphasenzeit $t_K$ = 70 ms festgelegt, die sich wiederum beispielsweise durch eine Multiplikation der Anzahl n = 7 der gewählten Kurzschlusszyklen $Z_{Kn}$ mit einer Durchschnitts-Kurzschlusszykluszeit $t_{ZKD}$ = 10ms ergibt. Infolge der vorgegebene oder einstellbaren Grenzzyklenzahl $n_G$ = 5 wird die Kaltphasendauer $D_K$ für eine voreinstellbare Anzahl n > $n_G$ von Kurzschlusszyklen $Z_{Kn}$ nunmehr durch die vorgegebene Kaltphasenzeit $t_K$ = 70 ms festgelegt. Beispielsweise könnte die Kaltphasenzeit $t_K$ automatisch aus der Anzahl n von Kurzschlusszyklen $Z_{Kn}$ und der Durchschnitts-Kurzschlusszykluszeit $t_{ZKD}$ von der Steuerungseinheit 14 ermittelt werden oder vom Benutzer vorgegeben werden. Im genannten Beispiel würden demnach die erste Kaltphasendauer $D_{K1}$ und die zweite Kaltphasendauer $D_{K2}$ jeweils 70ms betragen und die beiden Gesamt-Schweißzyklusdauern $D_{S1}$, $D_{S2}$ jeweils 170ms betragen. Natürlich ist das nur beispielhaft und die einzelnen Kurzschlusszykluszeiten $t_{ZKn}$ müssen auch nicht gleich groß sein, sondern können auch variieren.

Da vorzugsweise der am Ende einer Kaltphasenzeit $t_K$ einer Kaltschweißphase $P_K$ jeweils gerade ausgeführte Kurzschlusszyklus $Z_{Kn}$ abgeschlossen wird, bevor in die Warmschweißphase Pw gewechselt wird, kann es natürlich sein, dass die Gesamt-Schweißzyklusdauer $D_{S1}$, $D_{S2}$ zweier Gesamt-Schweißzyklen $P_{S1}$, $P_{S2}$ nicht genau übereinstimmen, allerdings ist die Abweichung wesentlich geringer als beim herkömmlichen CMT-Mix Prozess. Wenn beispielsweise der letzte Kurzschlusszyklus $Z_{Kn}$ der ersten Kurzschluss-Schweißphase $P_{K1}$ knapp mit dem Ende der Kaltphasenzeit $t_K$ zusammenfällt, weicht die erste Kaltphasendauer $D_{K1}$ nur gering von der Kaltphasenzeit $t_K$ ab, da nach Abschluss des letzten Kurzschlusszyklus $Z_{Kn}$ nach Überschreiten der Kaltphasenzeit $t_K$ kein weiterer Kurzschlusszyklus $Z_{Kn}$ mehr ausgeführt wird.

Wenn dann beispielsweise das Ende der Kaltphasenzeit $t_K$ der zweiten Kaltschweißphase $P_{K2}$ in die Mitte des letzten, aktuell ausgeführten Kurzschlusszyklus $Z_{Kn}$ fällt, würde die zweite Kaltphasendauer $D_{K2}$ im Wesentlichen der Kaltphasenzeit $t_K$ plus jener Zeit entsprechen, die der aktuell ausgeführte Kurzschlusszyklus $Z_{Kn}$ noch bis zur Beendigung des Zyklus benötigt.). Wenn das Ende der Kaltphasenzeit $t_K$ allerdings beispielsweise auf den Beginn eines Kurzschlusszyklus $Z_{Kn}$ fallen würde und der Kurzschlusszyklus $Z_{Kn}$ vorzugsweise abgeschlossen werden würde, bevor in die Warmschweißphase Pw gewechselt werden würde, kann es wie beschrieben sinnvoll sein, einen Toleranzzeitpunkt $t_T$ festzulegen, ab dem kein neuer Kurzschlusszyklus $Z_{Kn}$ mehr gestartet wird, wie nachfolgend unter Bezugnahme auf Fig.4a-c noch näher erläutert wird.

In den Fig. 4a bis 4c sind unterschiedliche Abläufe des Schweißverfahrens, jeweils mit einer Kaltschweißphase $P_K$ (als Kurzschluss-Schweißphase) mit einer Anzahl n von Kurzschlusszyklen $Z_{Kn}$ und einer darauffolgenden Warmschweißphase Pw (als Pulsschweißphase) nochmals gegenübergestellt. Auf der Y-Achse ist als beispielhafter Schweißparameter ein Schweißstrom I aufgetragen und auf der X-Achse ist die Zeit t aufgetragen. Statt des Schweißstroms I könnte aber genauso die Schweißspannung U aufgetragen werden, da sich Schweißstrom I und Schweißspannung U im Wesentlichen gleich verhalten. Jeder Kurzschlusszyklus $Z_{Kn}$ dauert eine bestimmte Kurzschlusszykluszeit $t_{ZKn}$, wobei sich die einzelnen Kurzschlusszykluszeiten $t_{ZKn}$ der Kurzschlusszyklen $Z_{Kn}$ unterscheiden können, wie bereits beschrieben wurde und in Fig.4a-c angedeutet ist. Der Wechsel von der Kaltschweißphase $P_K$ in die nachfolgende Warmschweißphase Pw erfolgt vorzugsweise, so wie dargestellt, am Ende des jeweils letzten Kurschlusszyklus $Z_{Kn}$ also in der Kurzschlussphase KP des Kurschlusszyklus $Z_{Kn}$.

In Fig. 4a ist eine erste Kaltschweißphase $P_{KA}$ mit einer ersten Kaltphasendauer $D_{KA}$ dargestellt. Die Grenzzyklenzahl $n_G$ beträgt $n_G$=5 und die eingestellte Anzahl n von Kurzschlusszyklen $Z_{Kn}$ beträgt n=4 . Somit ist die eingestellte Anzahl n kleiner als die Grenzzyklenzahl $n_G$, sodass die n=4 Kurzschlusszyklen $Z_{Kn}$ durchgeführt werden und keine Umschaltung auf eine Zeitabfrage (Kaltphasenzeit $t_K$) erfolgt. An die Kaltschweißphase $P_{KA}$ anschließend folgt die Warmscheißphase $P_{WA}$ für die Warmphasendauer $D_{WA}$ Die erste Kaltphasendauer $D_{KA}$ entspricht damit der Summe $\Sigma t_{ZKn}$ der Kurzschlusszykluszeiten $t_{ZKn}$ der Anzahl n=4 Kurzschlusszyklen $Z_{Kn}$. Die erste Gesamt-Schweißzyklusdauer $D_{SA}$ des ersten Gesamt-Schweißzyklus $P_{SA}$ ergibt sich folglich zu $D_{SA}=D_{KA}+D_{WA}$. Aufgrund der möglichen unterschiedlichen Kurzschlusszykluszeiten $t_{ZKn}$ der Kurzschlusszyklen $Z_{Kn}$ kann ein nachfolgender Gesamt-Schweißzyklus $P_{SA}$ beispielsweise eine längere oder kürzere Schweißzyklusdauer $D_{SA}$ aufweisen. Eine möglichst konstante Schuppenlänge si der Schweißschuppen 20 (Fig.3) kann damit nicht gewährleistet werden, wobei die Abweichung der Schuppenlänge si der Schweißschuppen 20 aufgrund der relativ geringen Anzahl n=4 von Kurzschlusszyklen $Z_{Kn}$ unter Umständen in einem akzeptablen Bereich liegt.

Im Beispiel gemäß Fig.4b i eine Grenzzyklenzahl $n_G$=5 vorgegeben und die Anzahl n von Kurzschlusszyklen wird auf n=7 eingestellt. Die Anzahl n=7 an Kurzschlusszyklen $Z_{Kn}$ ist damit größer als die vorgegebene Grenzzyklenzahl $n_G$=5. Das bedeutet, dass die Länge der Kaltphasendauer $D_{KB}$ folglich nicht durch die Summe $\Sigma t_{ZKn}$ der Anzahl n=7 von Kurzschlusszyklen $Z_{Kn}$ mit je einer Kurzschlusszykluszeit $t_{ZKn}$ bestimmt ist, sondern durch die Kaltphasenzeit $t_K$. Die Kaltphasenzeit $t_K$ berechnet sich dabei vorzugsweise aus der Anzahl n von Kurzschlusszyklen $Z_{Kn}$, insbesondere durch eine Multiplikation der Anzahl n=7 der Kurzschlusszyklen $Z_{Kn}$ mit einer Durchschnitts-Kurzschlusszyklenzeit $t_{ZKD}$. Die Durchschnitts-Kurzschlusszyklenzeit $t_{ZKD}$ kann beispielsweise aus Erfahrungswerten stammen oder z.B. von der Steuerungseinheit 14 aus bereits vorher durchgeführten Schweißvorgängen, insbesondere aus den Kurzschlusszykluszeiten $t_{ZKn}$ der Kurzschlusszyklen $Z_{Kn}$ gemittelt werden. Wenn, so wie in Fig.4b dargestellt, bei Ablauf der Kaltphasenzeit $t_K$ der letzte Kurzschlusszyklus $Z_{K7}$ noch nicht abgeschlossen ist, wird dieser vorzugsweise beendet, bevor in die Warmscheißphase $P_{WB}$ gewechselt wird. Die Kaltphasendauer $D_{KB}$ berechnet sich dann vorzugsweise aus der Kaltphasenzeit $t_K$, plus der Zeit $\Delta t$, die notwendig ist, um den bereits angefangenen Kurzschlusszyklus $Z_{k7}$ abzuschließen.

Im Beispiel gemäß Fig.4c ist zusätzlich vor Ende der Kaltphasenzeit $t_K$ noch ein Toleranzzeitpunkt $t_T$ vorgegeben, was z.B. über die Steuerungseinheit 14 erfolgen kann. Wenn ein gerade durchgeführter Kurzschlusszyklus $Z_{Kn}$ zu einem Zeitpunkt endet, der zwischen dem Toleranzzeitpunkt $t_T$ und dem Ende der Kaltphasenzeit tK liegt, dann wird nach Beendigung dieses Kurzschlusszyklus $Z_{Kn}$ (hier sechster Kurzschlusszyklus $Z_{K6}$) vorzugsweise direkt in die Warmschweißphase Pw gewechselt, ohne einen neuen Kurzschlusszyklus $Z_{Kn}$ zu starten. Die Kaltphasendauer $D_{KC}$ der Kaltschweißphase $P_{KC}$ kann also unter Umständen auch kürzer sein, als die vorgegebene Kaltphasenzeit $t_K$, die sich wiederum vorzugsweise aus der Anzahl n von Kurzschlusszyklen $Z_{Kn}$ und der Durchschnitts-Kurzschlusszyklenzeit $t_{ZKD}$ ergibt.

Der Bereich zwischen dem Toleranzzeitpunkt $t_T$ und dem Ende der Kaltphasenzeit $t_K$ bildet damit ein Toleranzfenster TF aus. Wenn der entsprechend gerade durchgeführte Kurzschlusszyklus $Z_{Kn}$ innerhalb des Toleranzfensters TF endet, wird vorzugsweise kein neuer Kurzschlusszyklus $Z_{Kn}$ mehr gestartet. Es wird also nach jedem Kurzschlusszyklus $Z_{Kn}$ abgefragt (z.B. durch die Steuerungseinheit 14), ob die eingestellte Kaltphasenzeit $t_K$ schon erreicht ist oder nicht und ob sich das Ende des Kurzschlusszyklus $Z_{Kn}$ innerhalb des Toleranzfensters TF befindet. Da der Kurzschlusszyklus $Z_{K6}$ in Fig.4c vor Ende der Kaltphasenzeit $t_K$ und nach dem Toleranzzeitpunkt $t_{TC}$ endet (also im Toleranzfenster TFc), wird hier kein weiterer Kurzschlusszyklus $Z_{Kn}$ durchgeführt, sondern es wird direkt in die Warmschweißphase Pwc (mit einer Warmphasendauer Dwc) gewechselt.

Natürlich sind die genannten Beispiele aber nur beispielhaft zu verstehen und sollen zur Veranschaulichung des Verfahrens dienen. Die konkrete Ausgestaltung des Verfahrens, z.B. die Wahl eines bestimmten Schutzgases SG, eines bestimmten Elektrodenmaterials, die Wahl bestimmter Schweißparameter wie Drahtvorschub, Schweißstrom I und Schweißspannung U, die Wahl der Anzahl n von Kurzschlusszyklen $Z_{Kn}$, und insbesondere die Grenzzyklenzahl $n_G$ etc. liegt natürlich im Ermessen des Fachmanns.

## Patentansprüche

1. Verfahren zum Steuern eines Schweißprozesses mit einer abschmelzenden Elektrode (7), bei dem nach dem Zünden eines Lichtbogens zwischen der Elektrode (7) und einem Grundstoff (G) zumindest zwei unterschiedliche zeitlich sequentielle Schweißphasen ($P_K$, Pw) verwendet werden, wobei während einer Kaltphasendauer ($D_K$) eine Kaltschweißphase ($P_K$) verwendet wird und während einer darauffolgenden Warmphasendauer (Dw) eine Warmschweißphase (Pw) verwendet wird, wobei in der Kaltschweißphase ($P_K$) zumindest ein Kurzschlusszyklus ($Z_{Kn}$) mit einer Kurzschlusszykluszeit ($t_{ZKn}$) durchgeführt wird und wobei nach der Kaltschweißphase ($P_K$) in die Warmschweißphase (Pw) gewechselt wird, wobei

   eine bestimmte Anzahl (n) von Kurzschlusszyklen ($Z_{Kn}$) für die Kaltschweißphase ($P_K$) vorgegeben wird, **dadurch gekennzeichnet dass** die Kaltphasendauer ($D_K$) der Kaltschweißphase ($P_K$) bei einer, eine vorgegebene Grenzzyklenzahl ($n_G$) überschreitenden Anzahl (n) von Kurzschlusszyklen ($Z_{Kn}$) in Abhängigkeit einer ermittelten Kaltphasenzeit ($t_K$) bestimmt wird, wobei zur Bestimmung der Kaltphasendauer ($D_K$) ein zum Zeitpunkt des Ablaufs der Kaltphasenzeit ($t_K$) bereits gestarteter Kurzschlusszyklus ($Z_{Kn}$) abgeschlossen wird, bevor in die Warmschweißphase (Pw) gewechselt wird.

2. Verfahren nach Anspruch 1 , **dadurch gekennzeichnet, dass** zur Bestimmung der Kaltphasendauer ($D_K$) in Abhängigkeit der Kaltphasenzeit ($t_K$) vor dem Ende der Kaltphasenzeit (tK) ein Toleranzzeitpunkt ($t_T$) vorgegeben wird, ab dem der Start eines neuen Kurzschlusszyklus ($Z_{Kn}$) unterlassen wird, wobei ein zum Toleranzzeitpunkt ($t_T$) durchgeführter Kurzschlusszyklus ($Z_{Kn}$) beendet wird, bevor in die Warmschweißphase (Pw) gewechselt wird.

3. Verfahren nach Anspruch 1 oder 2, **dadurch gekennzeichnet, dass** die Grenzzyklenzahl ($n_G$) zwischen eins und dreißig, vorzugsweise zwischen fünf und zwölf gewählt wird.

4. Verfahren nach einem der Ansprüche 1 bis 3, **dadurch gekennzeichnet, dass** die Kaltphasenzeit ($t_K$) festgelegt wird, indem die Anzahl (n) der vorgegebenen Kurzschlusszyklen ($Z_{Kn}$) mit einer Durchschnitts-Kurzschlusszykluszeit ($t_{ZKD}$) multipliziert wird, wobei die Durchschnitts-Kurzschlusszykluszeit ($t_{ZKD}$) zwischen fünf und fünfzehn Millisekunden festgelegt wird, vorzugsweise zehn Millisekunden.

5. Verfahren nach einem der Ansprüche 1 bis 4, **dadurch gekennzeichnet, dass** die Elektrode (7) je Kurzschlusszyklus ($Z_{Kn}$) jeweils einmal bis zur Berührung des Grundstoffs (G) in Richtung des Grundstoffs (G) bewegt wird und danach, nach Bildung eines Kurzschlusses, vorzugsweise in entgegengesetzter Richtung vom Grundstoff (G) weg bewegt wird.

6. Verfahren nach einem der Ansprüche 1 bis 5, **dadurch gekennzeichnet, dass** als Schweißstrom (I) in der Warmschweißphase (Pw) ein gepulster Schweißstrom (I) verwendet wird.

7. Verfahren nach einem der Ansprüche 1 bis 6, **dadurch gekennzeichnet, dass** die Kaltphasendauer ($D_K$) der Kaltschweißphase ($P_K$) bei einer, der Grenzzyklenzahl ($n_G$) entsprechenden oder die Grenzzyklenzahl ($n_G$) unterschreitenden Anzahl (n) von Kurzschlusszyklen ($Z_{Kn}$) durch eine Summe ($\sum t_{ZKn}$) der Kurzschlusszykluszeiten ($t_{ZKn}$) der vorgegebenen Anzahl (n) von Kurzschlusszyklen ($Z_{Kn}$) bestimmt wird.

8. Schweißvorrichtung (1) zum Durchführen eines Schweißprozesses mit zumindest einer Steuerungseinheit (14) zum Steuern des Schweißprozesses, einem Schweißbrenner (4) und zumindest einer Vorschubeinheit (12) zum Zuführen einer abschmelzende Elektrode (7) zum Schweißbrenner (4), wobei die Steuerungseinheit (14) zumindest dazu vorgesehen ist, während einer Kaltphasendauer ($D_K$) eine Kaltschweißphase ($P_K$) durchzuführen und während einer darauffolgenden Warmphasendauer ($D_W$) eine Warmschweißphase ($P_W$) durchzuführen, wobei in der Kaltschweißphase ($P_K$) zumindest ein Kurzschlusszyklus ($Z_{Kn}$) mit einer Kurzschlusszykluszeit ($t_{ZKn}$) vorgesehen ist und wobei die Steuerungseinheit (14) dazu vorgesehen ist, nach der Kaltschweißphase ($P_K$) in die Warmschweißphase (Pw) zu wechseln, **dadurch gekennzeichnet, dass** die Steuerungseinheit (14) die Kaltphasendauer ($D_K$) der Kaltschweißphase ($P_K$) steuert, wobei eine bestimmte Anzahl (n) von Kurzschlusszyklen ($Z_{Kn}$) für die Kaltschweißphase ($P_K$) vorgegeben ist und dass die Kaltphasendauer ($D_K$) der Kaltschweißphase ($P_K$) bei einer, die vorgegebene Grenzzyklenzahl ($n_G$) überschreitenden Anzahl (n) von Kurzschlusszyklen ($Z_{Kn}$) von einer bestimmten Kaltphasenzeit ($t_K$) abhängig ist, wobei die Steuerungseinheit (14) vorgesehen ist, zur Bestimmung der Kaltphasendauer ($D_K$) einen zum Zeitpunkt des Ablaufs der Kaltphasenzeit ($t_K$) bereits gestarteten Kurzschlusszyklus ($Z_{Kn}$) vor dem Wechsel in die Warmschweißphase (Pw) abzuschließen.

9. Schweißvorrichtung (1) nach Anspruch 8 , **dadurch gekennzeichnet, dass** in der Steuerungseinheit (14) zur Bestimmung der Kaltphasendauer ($D_K$) in Abhängigkeit der Kaltphasenzeit ($t_K$) ein Toleranzzeitpunkt ($t_T$) vor dem Ende der Kaltphasenzeit ($t_K$) festlegbar ist, ab dem der Start eines neuen Kurzschlusszyklus ($Z_{Kn}$) unterlassen wird, wobei die Steuerungseinheit (14) vorgesehen ist, vor dem Wechsel in die Warmschweißphase (Pw) einen zum Toleranzzeitpunkt ($t_T$) durchgeführten Kurzschlusszyklus ($Z_{Kn}$) abzuschließen.

10. Schweißvorrichtung (1) nach Anspruch 8 oder 9, **dadurch gekennzeichnet, dass** die Grenzzyklenzahl ($n_G$)zwischen eins und dreißig, vorzugsweise zwischen fünf und zehn beträgt.

11. Schweißvorrichtung (1) nach einem der Ansprüche 8 bis 10, **dadurch gekennzeichnet, dass** die Steuerungseinheit (14) vorgesehen ist, die Kaltphasenzeit ($t_K$) durch eine Multiplikation der Anzahl (n) der vorgegebenen Kurzschlusszyklen ($Z_{Kn}$) mit einer Durchschnitts-Kurzschlusszykluszeit ($t_{ZKD}$) festzulegen, wobei die Durchschnitts-Kurzschlusszykluszeit ($t_{ZKD}$) zwischen fünf und fünfzehn Millisekunden beträgt, vorzugsweise zehn Millisekunden.

12. Schweißvorrichtung (1) nach einem der Ansprüche 8 bis 11, **dadurch gekennzeichnet, dass** eine Benutzerschnittstelle (17) zum Bedienen der Schweißvorrichtung (1) vorgesehen ist, wobei die Benutzerschnittstelle (17) zumindest zur Vorgabe von Schweißparametern vorgesehen ist, insbesondere zur Vorgabe der Grenzzyklenzahl ($n_G$).

13. Schweißvorrichtung (1) nach einem der Ansprüche 8 bis 12, **dadurch gekennzeichnet, dass** die Steuerungseinheit (14) vorgesehen ist, in jedem Kurzschlusszyklus ($Z_{Kn}$) eine Bewegung der Elektrode (7) bis zur Berührung des Grundstoffs (G) in Richtung des Grundstoffs (G) und danach, nach Bildung eines Kurzschlusses, vorzugsweise eine Bewegung in entgegengesetzter Richtung vom Grundstoff (G) weg durchzuführen.

14. Schweißvorrichtung (1) nach einem der Ansprüche 8 bis 13, **dadurch gekennzeichnet, dass** die Steuerungseinheit (14) vorgesehen ist, in der Warmschweißphase ($P_W$) einen gepulsten Schweißstrom (I) zu verwenden.

15. Schweißvorrichtung (1) nach einem der Ansprüche 8 bis 14, **dadurch gekennzeichnet, dass** die Kaltphasendauer ($D_K$) der Kaltschweißphase ($P_K$) bei einer, der vorgegebenen Grenzzyklenzahl ($n_G$) entsprechenden oder die vorgegebene Grenzzyklenzahl ($n_G$) unterschreitenden Anzahl (n) von Kurzschlusszyklen ($Z_{Kn}$) durch eine Summe ($\Sigma t_{ZKn}$) der Kurzschlusszykluszeiten ($t_{ZKn}$) der Anzahl (n) von Kurzschlusszyklen ($Z_{Kn}$) bestimmt ist.

**Claims**

1. Method for controlling a welding process with a consumable electrode (7), in which method, after the ignition of an arc between the electrode (7) and a base material (G), at least two different chronologically sequential welding phases ($P_K$, Pw) are used, wherein a cold welding phase ($P_K$) is used during a cold phase duration ($D_K$) and a hot welding phase (Pw) is used during a subsequent hot phase duration (Dw), wherein at least one short-circuit cycle ($Z_{Kn}$) having a short-circuit cycle time ($t_{ZKn}$) is carried out in the cold welding phase ($P_K$), wherein after the cold welding phase ($P_K$), there is a switch to the hot welding phase (Pw) and wherein a specific number (n) of short-circuit cycles ($Z_{Kn}$) is specified for the cold welding phase ($P_K$), **characterized in that** the cold phase duration ($D_K$) of the cold welding phase ($P_K$) is determined, for a number (n) of short-circuit cycles ($Z_{Kn}$) that exceeds a specified limit cycle number ($n_G$), depending on a determined cold phase time ($t_K$), wherein in order to determine the cold phase duration ($D_K$), a short-circuit cycle ($Z_{Kn}$) that has already started at the time of expiry of the cold phase time ($t_K$) is completed before the switch to the hot welding phase (Pw).

2. Method according to claim 1, **characterized in that** in order to determine the cold phase duration ($D_K$) depending on the cold phase time ($t_K$) before the end of the cold phase time ($t_K$), a tolerance point in time ($t_T$) is specified from which the start of a new short-circuit cycle ($Z_{Kn}$) is omitted, a short-circuit cycle ($Z_{Kn}$) carried out at the tolerance point in time ($t_T$) being ended before the switch to the hot welding phase (Pw).

3. Method according to either claim 1 or claim 2, **characterized in that** the limit cycle number ($n_G$)is selected to be between one and thirty, preferably between five and twelve.

4. Method according to any of claims 1 to 3, **characterized in that** the cold phase time ($t_K$) is determined by multiplying the number (n) of specified short-circuit cycles ($Z_{Kn}$) by an average short-circuit cycle time ($t_{ZKD}$), the average short-circuit cycle time ($t_{ZKD}$) being set between five and fifteen milliseconds, preferably ten milliseconds.

5. Method according to any of claims 1 to 4, **characterized in that** the electrode (7) is moved once per short-circuit cycle ($Z_{Kn}$) in the direction of the base material (G) until it touches the base material (G) and then, after a short circuit has formed, is preferably moved away from the base material (G) in the opposite direction.

6. Method according to any of claims 1 to 5, **characterized in that** a pulsed welding current (I) is used as the welding current (I) in the hot welding phase (Pw).

7. Method according to any of claims 1 to 6, **characterized in that** the cold phase duration ($D_K$) of the cold welding phase ($P_K$) is determined, for a number (n) of short-circuit cycles ($Z_{Kn}$) that corresponds to the limit cycle number ($n_G$) or is below the limit cycle number ($n_G$), by a sum ($\sum t_{ZKn}$) of the short-circuit cycle times ($t_{ZKn}$) of the specified number (n) of short-circuit cycles ($Z_{Kn}$).

8. Welding device (1) for carrying out a welding process comprising at least one control unit (14) for controlling the welding process, a welding torch (4) and at least one feed unit (12) for feeding a consumable electrode (7) to the welding torch (4), the control unit (14) being configured at least to carry out a cold welding phase ($P_K$) during a cold phase duration ($D_K$) and to carry out a hot welding phase (Pw) during a subsequent hot phase duration (Dw), at least one short-circuit cycle ($Z_{Kn}$) having a short-circuit cycle time ($t_{ZKn}$) being provided in the cold welding phase ($P_K$) and wherein the control unit (14) is configured to switch to the hot welding phase (Pw) after the cold welding phase ($P_K$), **characterized in that** the control unit (14) controls the cold phase duration ($D_K$) of the cold welding phase ($P_K$), wherein a specific number (n) of short-circuit cycles ($Z_{Kn}$) is specified for the cold welding phase ($P_K$) and **in that** the cold phase duration ($D_K$) of the cold welding phase ($P_K$), for a number (n) of short-circuit cycles ($Z_{Kn}$) that exceeds a specified limit cycle number ($n_G$), is dependent on a determined cold phase time ($t_K$) , wherein the control unit (14) is configured to complete a short-circuit cycle ($Z_{Kn}$) that has already started at the time of expiry of the cold phase time ($t_K$) before the switch to the hot welding phase (Pw) in order to determine the cold phase duration ($D_K$).

9. Welding device (1) according to claim 8, **characterized in that** in the control unit (14) for determining the cold phase duration ($D_K$) depending on the cold phase time ($t_K$), a tolerance point in time ($t_T$) can be set before the end of the cold phase time ($t_K$), from which tolerance point the start of a new short-circuit cycle ($Z_{Kn}$) is omitted, the control unit (14) being configured to complete a short-circuit cycle ($Z_{Kn}$) carried out at the tolerance point in time ($t_T$) before the switch to the hot welding phase (Pw).

10. Welding device (1) according to either claim 8 or claim 9, **characterized in that** the limit cycle number ($n_G$) is between one and thirty, preferably between five and ten.

11. Welding device (1) according to any of claims 8 to 10, **characterized in that** the control unit (14) is configured for determining the cold phase time ($t_K$) by multiplying the number (n) of specified short-circuit cycles ($Z_{Kn}$) by an average short-circuit cycle time ($t_{ZKD}$), the average short-circuit cycle time ($t_{ZKD}$) being between five and fifteen milliseconds, preferably ten milliseconds.

12. Welding device (1) according to any of claims 8 to 11, **characterized in that** a user interface (17) is provided for operating the welding device (1), the user interface (17) being provided at least for specifying welding parameters, in particular for specifying the limit cycle number ($n_G$).

13. Welding device (1) according to any of claims 8 to 12, **characterized in that** the control unit (14) is configured, in each short-circuit cycle ($Z_{Kn}$), to move the electrode (7) in the direction of the base material (G) until it touches the base material (G) and then, after a short circuit has formed, preferably to move the electrode away from the base material (G) in the opposite direction.

14. Welding device (1) according to any of claims 8 to 13, **characterized in that** the control unit (14) is configured to use a pulsed welding current (I) in the hot welding phase (Pw).

15. Welding device (1) according to any of claims 8 to 14, **characterized in that** the cold phase duration ($D_K$) of the cold welding phase ($P_K$) is determined, for a number (n) of short-circuit cycles ($Z_{Kn}$) that corresponds to the specified limit cycle number ($n_G$) or is below the specified limit cycle number ($n_G$), by a sum ($\sum t_{ZKn}$) of the short-circuit cycle times ($t_{ZKn}$) of the number (n) of short-circuit cycles ($Z_{Kn}$).


**Revendications**

1. Procédé permettant la commande d'un processus de soudage avec une électrode (7) fusible, dans lequel, après l'allumage d'un arc électrique entre l'électrode (7) et un matériau de base (G), au moins deux phases de soudage ($P_K$, Pw) différentes séquentielles dans le temps sont utilisées, une phase de soudage à froid ($P_K$) étant utilisée pendant une durée de phase froide ($D_K$) et une phase de soudage à chaud (Pw) étant utilisée pendant une durée de phase chaude (Dw) suivante, au moins un cycle de court-circuit ($Z_{Kn}$) comportant un temps de cycle de court-circuit ($t_{ZKn}$) étant effectué dans la phase de soudage à froid ($P_K$) et, après la phase de soudage à froid ($P_K$), un passage vers la phase de soudage à chaud (Pw) ayant lieu, un nombre (n) déterminé de cycles de court-circuit ($Z_{Kn}$) étant prédéfini pour la phase de soudage à froid ($P_K$),
**caractérisé en ce que** la durée de phase froide ($D_K$) de la phase de soudage à froid ($P_K$) est déterminée pour un nombre (n) de cycles de court-circuit ($Z_{Kn}$) dépassant un nombre de cycles limite ($n_G$) prédéterminé en fonction d'un temps de phase froide ($t_K$) défini, un cycle de court-circuit ($Z_{Kn}$) déjà lancé au moment de l'expiration du temps de phase froide ($t_K$) étant achevé avant le passage vers la phase de soudage à chaud (Pw) pour la détermination de la durée de phase froide ($D_K$).

2. Procédé selon la revendication 1, **caractérisé en ce que,** pour la détermination de la durée de phase froide ($D_K$) en fonction du temps de phase froide ($t_K$), un moment de tolérance ($t_T$) est prédéfini avant la fin du temps de phase froide ($t_K$), à partir duquel le démarrage d'un nouveau cycle de court-circuit ($Z_{Kn}$) est omis, un cycle de court-circuit ($Z_{Kn}$) effectué au moment de tolérance ($t_T$) étant terminé avant le passage vers la phase de soudage à chaud (Pw).

3. Procédé selon la revendication 1 ou 2, **caractérisé en ce que** le nombre de cycles limite ($n_G$) est choisi entre un et trente, de préférence entre cinq et douze.

4. Procédé selon l'une des revendications 1 à 3, **caractérisé en ce que** le temps de phase froide ($t_K$) est fixé en multipliant le nombre (n) des cycles de court-circuit ($Z_{Kn}$) prédéfinis par un temps de cycle de court-circuit moyen ($t_{ZKD}$), le temps de cycle de court-circuit moyen ($t_{ZKD}$) étant fixé entre cinq et quinze millisecondes, de préférence étant de dix millisecondes.

5. Procédé selon l'une des revendications 1 à 4, **caractérisé en ce que** l'électrode (7) est déplacée en direction du matériau de base (G) respectivement une fois par cycle de court-circuit ($Z_{Kn}$) jusqu'à entrer en contact avec le matériau de base (G), puis, après la formation d'un court-circuit, est de préférence déplacée à l'écart du matériau de base (G) dans la direction opposée.

6. Procédé selon l'une des revendications 1 à 5, **caractérisé en ce qu'**un courant de soudage pulsé (I) est utilisé comme courant de soudage (I) dans la phase de soudage à chaud (Pw).

7. Procédé selon l'une des revendications 1 à 6, **caractérisé en ce que** la durée de phase froide ($D_K$) de la phase de soudage à froid ($P_K$) est déterminée pour un nombre (n) de cycles de court-circuit ($Z_{Kn}$) correspondant au nombre de cycles limite ($n_G$) ou inférieur au nombre de cycles limite ($n_G$) par la somme ($\sum t_{ZKn}$) des temps de cycles de court-circuit ($t_{ZKn}$) du nombre (n) prédéfini de cycles de court-circuit ($Z_{Kn}$).

8. Dispositif de soudage (1) permettant d'effectuer un processus de soudage comportant au moins une unité de commande (14) permettant de commander le processus de soudage, un chalumeau de soudage (4) et au moins une unité d'avance (12) permettant d'amener une électrode (7) fusible au chalumeau de soudage (4), l'unité de commande (14) étant prévue au moins pour effectuer une phase de soudage à froid ($P_K$) pendant une durée de phase froide ($D_K$) et pour effectuer une phase de soudage à chaud (Pw) pendant une durée de phase chaude ($D_w$) suivante, au moins un cycle de court-circuit ($Z_{Kn}$) comportant un temps de cycle de court-circuit ($t_{ZKn}$) étant prévu dans la phase de soudage à froid ($P_K$) et l'unité de commande (14) étant prévue pour le passage vers la phase de soudage à chaud (Pw) après la phase de soudage à froid ($P_K$), **caractérisé en ce que** l'unité de commande (14) commande la durée de phase froide ($D_K$) de la phase de soudage à froid ($P_K$), un nombre (n) déterminé de cycles de court-circuit ($Z_{Kn}$) étant prévu pour la phase de soudage à froid ($P_K$), et **en ce que** la durée de phase froide ($D_K$) de la phase de soudage à froid ($P_K$) dépend d'un temps de phase froide ($t_K$) déterminé pour un nombre (n) de cycles de court-circuit ($Z_{Kn}$) dépassant le nombre de cycles limite ($n_G$) prédéfini, l'unité de commande (14) étant prévue pour achever un cycle de court-circuit ($Z_{Kn}$) déjà lancé au moment de l'expiration du temps de phase froide ($t_K$) avant le passage vers la phase de soudage à chaud (Pw), pour la détermination de la durée de phase froide ($D_K$).

9. Dispositif de soudage (1) selon la revendication 8, **caractérisé en ce que,** dans l'unité de commande (14), pour la détermination de la durée de phase froide ($D_K$) en fonction du temps de phase froide ($t_K$), un moment de tolérance ($t_T$) peut être fixé avant la fin du temps de phase froide ($t_K$), à partir duquel le démarrage d'un nouveau cycle de court-circuit ($Z_{Kn}$) est omis, l'unité de commande (14) étant prévue pour achever un cycle de court-circuit ($Z_{Kn}$) effectué au moment de tolérance ($t_T$) avant le passage vers la phase de soudage à chaud (Pw).

10. Dispositif de soudage (1) selon la revendication 8 ou 9, **caractérisé en ce que** le nombre de cycles limite ($n_G$) est compris entre un et trente, de préférence entre cinq et dix.

11. Dispositif de soudage (1) selon l'une des revendications 8 à 10, **caractérisé en ce que** l'unité de commande (14) est prévue pour fixer le temps de phase froide ($t_K$) en multipliant le nombre (n) des cycles de court-circuit ($Z_{Kn}$) prédéfinis par un temps de cycle de court-circuit moyen ($t_{ZKD}$), le temps de cycle de court-circuit moyen ($t_{ZKD}$)étant compris entre cinq et quinze millisecondes, de préférence étant de dix millisecondes.

12. Dispositif de soudage (1) selon l'une des revendications 8 à 11, **caractérisé en ce qu'**une interface utilisateur (17) permettant de faire fonctionner le dispositif de soudage (1) est prévue, l'interface utilisateur (17) étant prévue au moins pour la définition de paramètres de soudage, en particulier pour la définition du nombre de cycles limite ($n_G$).

13. Dispositif de soudage (1) selon l'une des revendications 8 à 12, **caractérisé en ce que** l'unité de commande (14) est prévue pour effectuer, dans chaque cycle de court-circuit ($Z_{Kn}$), un mouvement de l'électrode (7) en direction du matériau de base (G) jusqu'à entrer en contact avec le matériau de base (G), puis, après la formation d'un court-circuit, pour effectuer de préférence un mouvement à l'écart du matériau de base (G) dans la direction opposée.

14. Dispositif de soudage (1) selon l'une des revendications 8 à 13, **caractérisé en ce que** l'unité de commande (14) est prévue pour utiliser un courant de soudage pulsé (I) dans la phase de soudage à chaud (Pw).

15. Dispositif de soudage (1) selon l'une des revendications 8 à 14, **caractérisé en ce que** la durée de phase froide ($D_K$) de la phase de soudage à froid ($P_K$) est déterminée pour un nombre (n) de cycles de court-circuit ($Z_{Kn}$) correspondant au nombre de cycles limite ($n_G$) prédéfini ou inférieur au nombre de cycles limite ($n_G$) prédéfini par la somme ($\sum t_{ZKn}$) des temps de cycles de court-circuit ($t_{ZKn}$) du nombre (n) de cycles de court-circuit ($Z_{Kn}$).

Fig. 1

Fig. 2

Fig. 3

Fig. 4a

Fig. 4b

Fig. 4c

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005042199 A1
- WO 2018043626 A1
- US 2014124491 A1
- US 20120255940 A1